# EUROPEAN PATENT APPLICATION

(11) **EP 2 535 386 A1**
(43) Date of publication of application: **19.12.2012**
(21) Application number: 11742116.4
(22) Date of filing: 27.01.2011
(51) Int. Cl.: C09J 7/02, C09J 11/04, C09J 11/06, C09J 133/00

(54) **METHOD FOR PRODUCING THERMALLY CONDUCTIVE ADHESIVE SHEET**

(30) Priority: 12.02.2010 JP 2010028850
(71) Applicant: Nitto Denko Corporation, Osaka 567-8680 (JP)
(72) Inventor: FURUTA, Kenji, Ibaraki-shi Osaka 567-8680 (JP); NAKAYAMA, Junichi, Ibaraki-shi Osaka 567-8680 (JP); TERADA, Yoshio, Ibaraki-shi Osaka 567-8680 (JP); WANO, Takashi, Ibaraki-shi Osaka 567-8680 (JP)
(74) Representative: Stolmár, Matthias
(86) International application number: PCT/JP2011/051540
(87) International publication number: WO 2011/099369

(57) **Abstract**

The problem to be solved by the present invention is to provide a method for producing a thermally-conductive adhesive sheet capable of forming a thermally-conductive adhesive agent layer having a relatively low modulus of elasticity and at the same time being excellent in thermal conductivity. Provided is a method for producing a thermally-conductive adhesive sheet including a thermally-conductive adhesive agent layer by performing: a composition preparation step of preparing a thermally-conductive adhesive agent composition including a thermally-conductive particle and an acrylic polymer component; and an adhesive agent layer formation step of forming a sheet-shaped thermally-conductive adhesive agent layer with the thermally-conductive adhesive agent composition, wherein in the composition preparation step, a cyclic organic compound of 8 or less carbon atoms, or an organic compound of 3 or less carbon atoms having a hydroxy, ketone, aldehyde, carboxyl or nitrile group is mixed as a constitutional component of the thermally-conductive adhesive agent composition.

## Description

### TECHNICAL FIELD

The present invention relates to a method for producing a thermally-conductive adhesive sheet.

### BACKGROUND ART

There have hitherto been known thermally-conductive adhesive sheets including a thermally-conductive adhesive agent layer having thermal conductivity and adhesiveness, and being formed in a sheet-like shape. Such thermally-conductive adhesive sheets are used with the thermally-conductive adhesive agent layer thereof as disposed between a heat source such as an electronic device an an enclosure, a heat sink or the like. Such thermally-conductive adhesive sheets are also used, for example, so as to fix a heat source such as an electronic device to a heat sink with the aid of the adhesiveness of the thermally-conductive adhesive agent layer, an thus assume a role to efficiently conduct the heat from the heat source to the heat sink.

As a method for producing such a thermally-conductive adhesive sheet, there has been proposed a method in which by using, for example, a thermally-conductive adhesive agent composition including thermally-conductive particles such as an inorganic nitride particle an an acrylic polymer component, a sheet-shaped thermally-conductive adhesive agent layer is formed (Patent Literature 1).

The thermally-conductive adhesive agent layer obtained by such a type of method for producing a thermally-conductive adhesive sheet contains a relatively large amount of thermally-conductive particles in the thermally-conductive adhesive agent composition, and hence the thermal conductivity of the thermally-conductive adhesive agent layer can be sufficient, but there is a problem such that correspondingly the modulus of elasticity is increased and the adhesiveness is lowered.

In other words, the thermally-conductive adhesive agent layer obtained by such a type of method for producing a thermally-conductive adhesive sheet involves a problem such that it is relatively difficult to establish compatibility between the maintenance of a sufficient adhesiveness by rendering the modulus of elasticity relatively low and the maintenance of a sufficient thermal conductivity.

### CITATION LIST

### PATENT LITERATURE

Patent Document 1: Japanese Patent Laid-Open No. Hei-10-292157

### SUMMARY OF INVENTION

### TECHNICAL PROBLEM

The present invention has been achieved in view of the aforementioned problems and others, and an object of the present invention is to provide a method for producing a thermally-conductive adhesive sheet, capable of producing a thermally-conductive adhesive sheet including a thermally-conductive adhesive agent layer having a relatively low modulus of elasticity and at the same time being excellent in thermal conductivity.

### SOLUTION TO PROBLEM

According to the present invention, there is provided a method for producing a thermally-conductive adhesive sheet including a thermally-conductive adhesive agent layer by performing: a composition preparation step of preparing a thermally-conductive adhesive agent composition including a thermally-conductive particle and an acrylic polymer component; and an adhesive agent layer formation step of forming a sheet-shaped thermally-conductive adhesive agent layer with the thermally-conductive adhesive agent composition, wherein in the composition preparation step, a cyclic organic compound of 8 or less carbon atoms, or an organic compound of 3 or less carbon atoms having a hydroxy, ketone, aldehyde, carboxyl or nitrile group is mixed as a constitutional component of the thermally-conductive adhesive agent composition.

According to the above method for producing a thermally-conductive adhesive sheet, by mixing as a constitutional component of the thermally-conductive adhesive agent composition, a cyclic organic compound of 8 or less carbon atoms, or an organic compound of 3 or less carbon atoms having a hydroxy, ketone, aldehyde, carboxyl or nitrile group, the modulus of elasticity of the thermally-conductive adhesive agent layer can be made lower and the thermal conductivity of the thermally-conductive adhesive agent layer can be made higher than those of the thermally-conductive adhesive agent layer formed of a thermally-conductive adhesive agent composition not including any one of these organic compounds.

Also, in the method for producing a thermally-conductive adhesive sheet according to the present invention, preferably in the composition preparation step, 10 to 40 parts by weight of the cyclic organic compound of 8 or less carbon atoms, or 10 to 40 parts by weight of the organic compound of 3 or less carbon atoms having a hydroxy, ketone, aldehyde, carboxyl or nitrile group is used in relation to 100 parts by weight of the thermally-conductive particle.
The adoption of such a numerical range offers an advantage such that it is possible to form a thermally-conductive adhesive agent layer more excellent in thermal conductivity while having a lower modulus of elasticity.

In the method for producing a thermally-conductive adhesive sheet according to the present invention, preferably in the composition preparation step, 10 to 1000 parts by weight of the thermally-conductive particle is used in relation to 100 parts by weight of the acrylic polymer component.
The use of 10 parts by weight or more of the thermally-conductive particle in relation to 100 parts by weight of the acrylic polymer component offers an advantage such that the thermal conductivity of the thermally-conductive adhesive agent layer is made higher, and the use of 1000 parts by weight or less of the thermally-conductive particle in relation to 100 parts by weight of the acrylic polymer component offers an advantage such that the flexibility of the thermally-conductive adhesive agent layer is made higher and the adhesive force of the thermally-conductive adhesive agent layer can be made more excellent.

In the method for producing a thermally-conductive adhesive sheet according to the present invention, it is preferable that, by forming the thermally-conductive adhesive agent layer with the thermally-conductive adhesive agent composition including the cyclic organic compound of 8 or less carbon atoms, or the organic compound of 3 or less carbon atoms having a hydroxy, ketone, aldehyde, carboxyl or nitrile group, the modulus of elasticity of the thermally-conductive adhesive agent layer be made to be 90% or less in relation to the modulus of elasticity of the thermally-conductive adhesive agent layer formed of a thermally-conductive adhesive agent composition not including the organic compound.

In the method for producing a thermally-conductive adhesive sheet according to the present invention, it is preferable that, in the composition preparation step, at least one selected the group consisting of toluene and hexane as the cyclic organic compound of 8 or less carbon atoms and methanol and ethanol as the organic compound of 3 or less carbon atoms having a hydroxy group be mixed as a constitutional component of the thermally-conductive adhesive agent composition.
The use of such an organic compound offers an advantage such that it is possible to form a thermally-conductive adhesive agent layer having a lower modulus of elasticity and at the same time being more excellent in thermal conductivity.

In the method for producing a thermally-conductive adhesive sheet according to the present invention, it is preferable that, in the composition preparation step, ethyl acetate or butyl acetate be further mixed as a constitutional component of the thermally-conductive adhesive agent composition.

In the method for producing a thermally-conductive adhesive sheet according to the present invention, it is preferable that, in the composition preparation step, at least a boron nitride particle is used as the thermally-conductive particle.

In the method for producing a thermally-conductive adhesive sheet according to the present invention, it is preferable that the thermally-conductive adhesive agent layer be formed to have a thermal conductivity of 0.5 W/m.K or more.

### ADVANTAGEOUS EFFECT OF INVENTION

As described above, according to the present invention, it is possible to produce a thermally-conductive adhesive sheet including a thermally-conductive adhesive agent layer having a relatively low modulus of elasticity and at the same time being excellent in thermal conductivity.

### BRIEF DESCRIPTION OF DRAWING

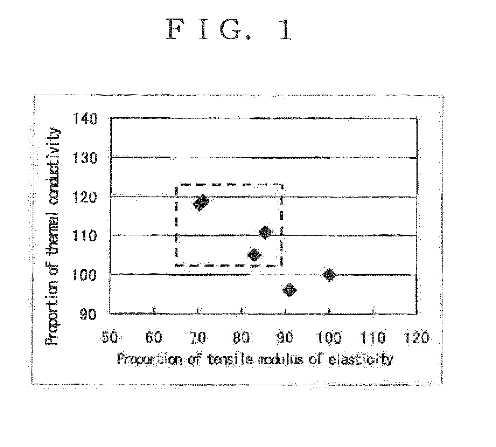

FIG. 1 is a graph plotting the relative values of the tensile modulus of elasticity and the relative values of the thermal conductivity of the thermally-conductive adhesive agent layer.

### DETAILED DESCRIPTION THE OF THE PREFERRED EMBODIMENTS

Hereinafter, an embodiment of the method for producing a thermally-conductive adhesive sheet according to the present invention will be described.

The method for producing a thermally-conductive adhesive sheet according to the present embodiment is a method for producing a thermally-conductive adhesive sheet, producing an adhesive sheet including a thermally-conductive adhesive agent layer by performing: a composition preparation step of preparing a thermally-conductive adhesive agent composition including a thermally-conductive particle and an acrylic polymer component; and an adhesive agent layer formation step of forming a sheet-shaped thermally-conductive adhesive agent layer with the thermally-conductive adhesive agent composition, wherein in the composition preparation step, a cyclic organic compound of 8 or less carbon atoms, or an organic compound of 3 or less carbon atoms having a hydroxy, ketone, aldehyde, carboxyl or nitrile group is mixed as a constitutional component of the thermally-conductive adhesive agent composition.
If necessary, after the adhesive agent layer formation step, a finishing step of completing the thermally-conductive adhesive sheet is performed by bonding a film as a support to a surface of the thermally-conductive adhesive agent layer.

In the composition preparation step, there is prepared a paste-like or liquid thermally-conductive adhesive agent composition in which a thermally-conductive particle, an acrylic polymer component, and a cyclic organic compound of 8 or less carbon atoms or an organic compound of 3 or less carbon atoms having a hydroxy, ketone, aldehyde, carboxyl or nitrile group are mixed.

The thermally-conductive particle is mixed as a constitutional component, and consequently increases the thermal conductivity of the thermally-conductive adhesive agent layer as compared to the case where no thermally-conductive particle is mixed.

As the thermally-conductive particle, particles such as inorganic nitride particles, metal hydroxide particles and metal oxide particles can be used.

As the inorganic nitride particle, for example, a boron nitride particle, an aluminum nitride particle, a silicon nitride particle and a gallium nitride particle can be used. Among these, it is preferable to use the boron nitride particle from the viewpoint that the boron nitride particle is more excellent in thermal conductivity and excellent in electrical insulation property. In other words, it is preferable to use at least the boron nitride particle as the inorganic nitride particle.
As the metal hydroxide particle, for example, an aluminum hydroxide particle and a magnesium hydroxide particle can be used.
Among these, as the metal hydroxide particle, it is preferable to use the aluminum hydroxide particle from the viewpoint that the aluminum hydroxide particle is higher in thermal conductivity and excellent in electrical insulation property.
As the metal oxide particle, for example, the particles of aluminum oxide, titanium oxide, zinc oxide, tin oxide, copper oxide, nickel oxide and antimony-doped tin oxide can be used.
Among these, as the metal oxide particle, it is preferable to use the aluminum oxide particle from the viewpoint that the aluminum oxide particle is higher in thermal conductivity an excellent in electrical insulation property.
As the thermally-conductive particle, in addition to the foregoing particles, for example, the following particles can be used: the particles of silicon carbide, silicon dioxide, calcium carbonate, barium titanate, potassium titanate, copper, silver, gold, nickel, aluminum, platinum, carbon black, carbon tube (carbon nanotube), carbon fiber and diamond.

As the thermally-conductive particle, the aforementioned particles of different substances may be used each substance alone or two or more substances in combination.

The shape of the thermally-conductive particle is not particularly limited; examples of the shape of the thermally-conductive particle include a spherical shape, a needle-like shape and a plate-like shape.

When the shape of the particle is spherical, the size of the thermally-conductive particle is preferably 0.1 to 1000 µm, more preferably 1 to 100 µm and furthermore preferably 2 to 20 µm in terms of the average primary particle size. When the average primary particle size is 1000 µm or less, the ratio of the size of the thermally-conductive particle to the thickness of the thermally-conductive adhesive agent layer can become small, and accordingly, the variation of the thickness of the thermally-conductive adhesive agent layer hardly occurs.
When the shape of the particle is needle-like or plate-like, the maximum length of the thermally-conductive particle is preferably 0.1 to 1000 µm, more preferably 1 to 100 µm and furthermore preferably 2 to 20 µm in terms of the average primary particle size. The maximum length being 1000 µm or less offers an advantage such that the mutual cohesion of the thermally-conductive particles is made difficult to occur and the handling of the thermally-conductive particle becomes easy.
The aspect ratio represented by the long axis length/the short axis length or the long axis length/the thickness when the shape of the thermally-conductive particle is needle-like, or the aspect ratio represented by the diagonal length/the thickness or the long side length/the thickness is preferably 1 to 10000 and more preferably 10 to 1000.

As the thermally-conductive particles, common commercially available products can used. For example, the following thermally-conductive particles can be used; as the boron nitride particle, "HP-40 (trade name)" manufactured by Mizushima Ferroalloy Co., Ltd. and "PT620 (trade name)" manufactured by Momentive Performance Materials Inc.; as the aluminum hydroxide particle, "Hidilite H-32 (trade name)" and "Hidilite H-42 (trade name)" manufactured by Showa Denko K.K.; as the aluminum oxide particle, "AS-50 (trade name)" manufactured by Showa Denko K.K.; as the magnesium hydroxide particle, "KISUMA 5A (trade name)" manufactured by Kyowa Chemical Industry Co., Ltd.; as the antimony-doped tin oxide particle, "SN-100S (trade name)," "SN-100P (trade name)" and "SN-100D (trade name) (aqueous dispersion)" manufactured by Ishihara Sangyo Kaisha, Ltd.; as the titanium oxide particle, "TTO Series (trade name)" manufactured by Ishihara Sangyo Kaisha, Ltd.; as the zinc oxide particle, "SnO-310 (trade name)," "SnO-350 (trade name)" and "SnO-410 (trade name)" manufactured by Sumitomo Osaka Cement Co., Ltd.

The thermally-conductive particle is used in an amount of preferably 10 to 1000 parts by weight, more preferably 50 to 500 parts by weight and furthermore preferably 100 to 400 parts by weight in relation to 100 parts by weight of the acrylic polymer component. The use of 10 parts by weight or more of the thermally-conductive particle in relation to 100 parts by weight of the polymer component offers an advantage such that the thermal conductivity of the thermally-conductive adhesive agent layer is made higher, and the use of 1000 parts by weight or less of the thermally-conductive particle in relation to 100 parts by weight of the acrylic polymer component offers an advantage such that the flexibility of the thermally-conductive adhesive agent layer is made higher and the adhesive force of the thermally-conductive adhesive agent layer can be made more excellent.

As the acrylic polymer component, commonly used acrylic polymers can be used.

The acrylic polymer includes as the monomer unit the (meth) acrylic monomer represented by the following general formula (1).

CH₂=C(R¹)COOR² (1)

(wherein R¹ is a hydrogen atom or a methyl group, and R² is an alkyl group having 1 to 18 carbon atoms.)

In the foregoing general formula (1), R² is preferably an alkyl group having 3 to 12 carbon atoms and more preferably an alkyl group having 4 to 8 carbon atoms. The alkyl group represented by R² may be either of a straight-chain alkyl group and a branched-chain alkyl group; a branched-chain alkyl group is preferable because of being lower in glass transition point.

Specific examples of the (meth)acrylic monomer represented by the general formula (1) include: methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, pentadecyl (meth)acrylate, hexadecyl (meth)acrylate, stearyl (meth)acrylate and isostearyl (meth)acrylate.

The (meth) acrylic monomers represented by the general formula (1) may be used each alone or as mixtures of two or more thereof.

The content of the (meth) acrylic monomer(s) represented by the general formula (1) in the acrylic polymer is preferably 50 to 98% by weight, more preferably 60 to 98% by weight and furthermore preferably 70 to 98% by weight. The inclusion of 50% by weight or more of the (meth) acrylic monomer(s) in the acrylic polymer offers an advantage such that adhesiveness of the thermally-conductive adhesive agent layer can be made more excellent.

The acrylic polymer is preferably a polymer polymerized by using polar group-containing monomers such as a hydroxy group-containing monomer and a carboxyl group-containing monomer.

The acrylic polymer is a polymer polymerized by using the polar group-containing monomer(s) in a proportion of preferably 0.1 to 20% by weight, more preferably 0.2 to 10% by weight and furthermore preferably 0.2 to 7% by weight in relation to the total amount of the monomer(s). The polymerization by using 0.1 to 20% by weight of the polar group-containing monomer(s) in relation to the total amount of the monomers offers an advantage such that the adhesiveness of the obtained acrylic polymer can be made more excellent.

The hydroxy group-containing monomer is a polymerizable monomer having one or more hydroxy groups in the molecule thereof. Usable examples of the hydroxy group-containing monomer include: 2-hydroxyethyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, N-hydroxy (meth)acrylamide, vinyl alcohol, allyl alcohol, 2-hydroxyethyl vinyl ether, 4-hydroxybutyl vinyl ether and diethylene glycol monovinyl ether. Among these, 4-hydroxybutyl (meth)acrylate and 6-hydroxyhexyl (meth)acrylate are preferably used.

The carboxyl group-containing monomer is a polymerizable monomer having one or more carboxyl groups in the molecule thereof. Usable examples of the carboxyl group-containing monomer included acrylic acid, methacrylic acid, carboxyethyl (meth)acrylate, carboxypentyl (meth)acrylate, itaconic acid, maleic acid, fumaric acid and crotonic acid. Among these, acrylic acid or methacrylic acid is preferably used,

In the synthesis of the acrylic polymer, for the purpose of regulating the glass transition point of the acrylic polymer and the peeling property of the thermally-conductive adhesive agent layer, polymerizable monomers other than the aforementioned (meth)acrylic monomers, hydroxy group-containing monomers and carboxyl group-containing monomers can be used within a range not impairing the advantageous effect of the present invention.

Examples of the other polymerizable monomers usable for the purpose of improving the cohesive force or the heat resistance of the acrylic polymer include sulfonic acid group-containing monomers, phosphoric acid group-containing monomers, nitrile group-containing monomers, vinyl ester monomers and aromatic vinyl monomers. Examples of the cross-linking group-containing monomers functioning as cross-linking base points in the acrylic polymer and appropriately usable for the purpose of improving the adhesive force of the acrylic polymer include: amide group-containing monomers, amino group-containing monomers, imide group-containing monomers, epoxy group-containing monomers and vinyl ether monomers.
The other polymerizable monomers may be used each alone or as mixtures of two or more thereof.

Usable examples of the sulfonic acid group-containing monomers include styrene sulfonic acid, allyl sulfonic acid,
2-(meth)acylamido-2-methylpropanesulfonic acid,
(meth)acrylamidopropanesulfonic acid, sulfopropyl (meth)acrylate and (meth)acryloyloxynaphthalenesulfonic acid.

Usable examples of the phosphoric acid group-containing monomers include 2-hydroxyethylacryloyl phosphate.

Usable examples of the nitrile group-containing monomers include acrylonitrile and methacrylonitrile.

Usable examples of the vinyl ester monomers include vinyl acetate, vinyl propionate, vinyl laurate and vinylpyrrolidone.

Usable examples of the aromatic vinyl monomers include styrene, chlorostyrene, chloromethylstyrene and α-methylstyrene.

Usable examples of the amide group-containing monomers include (meth)acrylamide, N,N-dimethyl (meth)acrylamide, N,N-diethyl (meth)acrylamide, N,N-diethyl methacrylamide, N-isopropyl (meth)acrylamide, N-methylol (meth)acrylamide, N-methoxymethyl (meth)acrylamide, N-butoxymethyl (meth)acrylamide, dimethyaminoethyl (meth)acrylate, t-butylaminoethyl (meth)acrylate, diacetone (meth)acrylamide, N-vinylacetamide, N,N'-methylene bis(meth)acrylamide, N,N-dimethylaminopropyl (meth)acrylamide, N-vinylcaprolactam and N-vinyl-2-pyrrolidone.

Usable examples of the amino group-containing monomers include aminoethyl (meth)acrylate, N,N-dimethylaminoethyl (meth)acrylate, N,N-dimethylaminopropyl (meth)acrylate and N-(meth)acryloyl morpholine.

Usable examples of the imide group-containing monomers include N-cyclohexyl maleimide, N-phenyl maleimide, N-methyl maleimide, N-ethyl maleimide, N-propyl maleimide, N-isopropyl maleimide, N-butyl maleimide and itacon imide.

Usable examples of the epoxy group-containing monomers include glycidyl (meth)acrylate and allyl glycidyl ether.

Usable examples of the vinyl ether monomers include methyl vinyl ether, ethyl vinyl ether and isobutyl vinyl ether.

Examples of the other polymerizable monomers, further usable if necessary, include: (meth)acrylic acid esters of cyclic alcohols such as cyclopentyl di(meth)acrylate and isobornyl (meth)acrylate; (meth)acrylic acid esters of polyhydric alcohols such as neopentylglycol di(meth)acrylate, hexanediol di(meth)acrylate, propylene glycol di(meth)acrylate, trimethylolpropane tri(meth)acrylate, tetramethylolmethane tri(meth)acrylate and dipentaerythritol hexa(meth)acrylate; and benzene ring-containing (meth)acrylic acid esters such as phenoxyethyl (meth)acrylate.

The acrylic polymer is a polymer polymerized by using the other polymerizable monomer(s) in a proportion of preferably 0 to 50% by weight, more preferably 0 to 35% by weight and furthermore preferably 0 to 25% by weight in relation to the total amount of the monomers.

The weight average molecular weight of the acrylic polymer is preferably 600,000 or more, more preferably 700,000 to 3,000,000 and furthermore preferably 800,000 to 2,500,000. The weight average molecular weight of 600, 000 or more offers an advantage such that the durability of the thermally-conductive adhesive agent layer including the acrylic polymer can be made excellent, and the weight average molecular weight of 3,000,000 or less offers an advantage such that the viscosity of the thermally-conductive adhesive agent composition can be made sufficiently low, and hence is excellent in workability.
The weight average molecular weight as referred to herein means a value as measured by GPC (gel permeation chromatography) and derived relative to polystyrene standards.

The glass transition temperature (Tg) of the acrylic polymer is preferably -5°C or lower and more preferably -10°C or lower from the viewpoint that the adhesiveness of the thermally-conductive adhesive agent layer can be made appropriate. The glass transition temperature of -5°C or lower results in a high fluidity of the acrylic polymer to allow the thermally-conductive adhesive agent layer to have a sufficient wettability to the adherend (such as an enclosure, a heat sink or a heat source such as an electrical device) in contact with the thermally-conductive adhesive agent layer. Accordingly, the adhesive force of the thermally-conductive adhesive agent layer can be more increased. The glass transition temperature (Tg) of the acrylic polymer can be regulated so as to fall within the aforementioned range by appropriately varying the types and the composition ratios of the monomers used.

The acrylic polymer can be prepared by various heretofore known radical polymerizations. As such various radical polymerizations, solution polymerization, bulk polymerization, emulsion polymerization or the like can be appropriately selected. The acrylic polymer may be either a homopolymer or a copolymer; when the acrylic polymer is a copolymer, the copolymer may be any of a random copolymer, a block copolymer, a graft copolymer and the like.

When the acrylic polymer is prepared by solution polymerization, ethyl acetate, toluene or the like can be used as a polymerization solvent. The polymerization solvent is removed usually by heat volatilization or the like after the preparation of the acrylic polymer.
An example of a specific solution polymerization method of the acrylic polymer is such that the polymerization reaction is performed in a flow of an inert gas such as nitrogen, by using 0.01 to 0.2 part by weight of azobisisobutyronitrile as a polymerization initiator in relation to 100 parts by weight of the total amount of the monomers, in ethyl acetate as a polymerization solvent at approximately 50 to 90°C for approximately 2 to 30 hours.

In the polymerization of the acrylic polymer, a polymerization initiator, a chain transfer agent and an emulsifier can also be used. These polymerization initiator, chain transfer agent and emulsifier are not particularly limited; heretofore known polymerization initiators, chain transfer agents and emulsifiers can be appropriately selected to be used. The use of the chain transfer agent enables the molecular weight of the acrylic polymer to be appropriately regulated.

Usable examples of the polymerization initiators include: azo initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropioneamidine) disulfate, 2,2'-azobis(N,N'-dimethyleneisobutylamidine) and 2,2'-azobis[N-(2-carboxyethyl)-2-methylpropioneamidine] hydrate (trade name: "VA-057," manufactured by Wako Pure Chemical Industries, Ltd.); salts of persulfuric acid such as potassium persulfate and ammonium persulfate; peroxide initiators such as di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, t-butylperoxy isobutyrate, 1,1-di(t-hexylperoxy)cyclohexane, t-butyl hydroperoxide and hydrogen peroxide; and redox initiators as combinations of a peroxide and a reducing agent such as a combination of a salt of persulfuric acid and sodium bisulfite and a combination of a peroxide and sodium ascorbate. However, the polymerization initiator is not limited to these examples.

The polymerization initiators may be used each alone or as mixtures of two or more thereof. The polymerization initiator(s) is preferably used in an amount of 0.005 to 1 part by weight and more preferably approximately 0.02 to 0.5 parts by weight in relation to 100 parts by weight of the monomer(s).

Usable examples of the chain transfer agent include lauryl mercaptan, glycidyl mercaptan, mercaptoacetic acid, 2-mercaptoethanol, thioglycolic acid, 2-ethylhexyl thioglycolate and 2,3-dimercapto-1-propanol.

The chain transfer agents may be used each alone or as mixtures of two or more thereof. The chain transfer agent(s) is used usually in an amount of 0.01 to 0.1 parts by weight in relation to 100 parts by weight of the total amount of the monomer(s).

When the acrylic polymer is prepared by emulsion polymerization, for example, the following emulsifiers can be used: anionic emulsifiers such as sodium laurylsulfate, ammonium laurylsulfate, sodium dodecylbenzenesulfonate, ammonium polyoxyethylene alkyl ether sulfate and sodium polyoxyethylene alkylphenyl ether sulfate; and nonionic emulsifiers such as polyoxyethylene alkyl ether, polyoxyethylene alkylphenyl ether, polyoxyethylene fatty acid ester and polyoxyethylene-polyoxypropylene block polymer. These emulsifiers may be used each alone or in combinations of two or more thereof.

As the emulsifier, it is also possible to use reactive emulsifiers into which a radical polymerizable functional group such as a propenyl group or an ally ether group is introduced, Specific usable examples of the reactive emulsifiers include "Aquaron HS-10," "Aquaron HS-20," "Aquaron KH-10," "Aquaron BC-05," "Aquaron BC-10" and "Aquaron BC-20" (the foregoing are all given in terms of trade names and manufactured by Dai-ichi Kogyo Seiyaku Co., Ltd.) and Adeka Reasoap SE10N (trade name, manufactured by Adeka Corp.).
The emulsifier(s) is used in an amount of preferably 0.3 to 5 parts by weight and more preferably 0.5 to 1 part by weight in relation to 100 parts by weight of the monomer(s) from the viewpoint that a stable emulsion polymerization is performed.

The reactive emulsifier is preferable in that the reactive emulsifier is incorporated into the polymer after polymerization, and hence the reactive emulsifier having a hydrophilic group hardly remains alone after the reaction, so as to allow the water resistance of the thermally-conductive adhesive agent layer to be excellent.

As the aforementioned cyclic organic compound of 8 or less carbon atoms or the aforementioned organic compound of 3 or less carbon atoms having a hydroxy, ketone, aldehyde, carboxyl or nitrile group, for example, the following organic compounds can be used.
The cyclic organic compound of 8 or less carbon atoms is preferably a six-membered ring organic compound of 8 or less carbon atoms, more preferably a six-membered ring organic compound of 8 or less carbon atoms in which the ring is constituted with carbon atoms; usable examples of such a compound include: phenol, cresol, benzene, toluene, xylene and hexane.
Usable examples of the organic compound of 3 or less carbon atoms having a hydroxy group include methanol, ethanol, isopropanol and ethylene glycol.
Usable examples of the organic compound of 3 or less carbon atoms having a ketone group include acetone.
Usable examples of the organic compound of 3 or less carbon atoms having an aldehyde group include acetaldehyde, propionaldehyde and dimethylformamide.
Usable examples of the organic compound of 3 or less carbon atoms having the carboxyl group include acetic acid and formic acid.
Usable examples of the organic compound of 3 or less carbon atoms having a nitrile group include acetonitrile.
In particular, methanol, ethanol, toluene or hexane is preferable among these. In other words, preferable is at least one selected from the group consisting of methanol, ethanol, toluene and hexane.

The aforementioned cyclic organic compound of 8 or less carbon atoms or the aforementioned organic compound of 3 or less carbon atoms having a hydroxy, ketone, aldehyde, carboxyl or nitrile group is used in an amount of preferably 10 to 40 parts by weight and more preferably 20 to 35 parts by weight in relation to 100 parts by weight of the thermally-conductive particle.
The use of 10 parts by weight or more of such an organic compound in relation to 100 parts by weight of the thermally-conductive particle offers an advantage such that the modulus of elasticity of the thermally-conductive adhesive agent layer can be made lower. The use of such an organic compound in an amount exceeding 40 parts by weight in relation to 100 parts by weight of the thermally-conductive particle sometimes may decrease the solubility of the acrylic polymer dissolved in a solvent for the acrylic polymer component, in the thermally-conductive adhesive agent composition.

In the composition preparation step, within a range not impairing the advantageous effect of the present invention, in addition to the aforementioned thermally-conductive particle, acrylic polymer component, cyclic organic compound of 8 or less carbon atoms or the organic compound of 3 or less carbon atoms having a hydroxy, ketone, aldehyde, carboxyl group or nitrile group, it is possible to appropriately add to the thermally-conductive adhesive agent composition the substances commonly used as the rubber/plastic compounding chemicals such as a solvent for dissolving the acrylic polymer component, a cross-linking agent, a silane coupling agent, a tackifier, a dispersant, an antiaging agent, an antioxidant, a processing aid, a stabilizer, an antifoaming agent, a flame retardant, a thickener and a pigment.

In the composition preparation step, it is preferable to further mix a solvent for dissolving the acrylic polymer component in the thermally-conductive adhesive agent composition from the viewpoint that the solubility of the acrylic polymer component in the thermally-conductive adhesive agent composition is made more sufficient or from the viewpoint that the viscosity of the thermally-conductive adhesive agent composition is made appropriately low and thus the thermally-conductive adhesive agent composition is made easy in handling.
The solvent for dissolving the acrylic polymer component is not particularly limited as long as the solvent can dissolve the acrylic polymer component.
As the solvent for dissolving the acrylic polymer component, for example, an acetic acid ester, which is an ester compound between acetic acid and an alcohol, can be used; as the acetic acid ester, ethyl acetate or butyl acetate is preferable.

In the composition preparation step, it is preferable to include the cross-linking agent in the thermally-conductive adhesive agent composition from the viewpoint that the adhesive force and the durability of the thermally-conductive adhesive agent layer are made more excellent.
As the cross-linking agent, it is possible to use heretofore known cross-linking agents such as isocyanate-based cross-linking agents, epoxy-based cross-linking agents, melamine-based cross-linking agents, oxazoline-based cross-linking agents, carbodiimide-based cross-linking agents, aziridine-based cross-linking agents and metal chelate-based cross-linking agents; in particular, it is preferable to use an isocyanate-based cross-linking agent.
The cross-linking agents may be used each alone or as mixtures of two or more thereof.

The cross-linking agent(s) is used in an amount of preferably 0.02 to 5 parts by weight, more preferably 0.04 to 3 parts by weight and furthermore preferably 0.05 to 2 parts by weight in relation to 100 parts by weight of the acrylic polymer component.
Thus, the following advantages are attained: the use of the cross-linking agent(s) in an amount of 0.02 part by weight or more in relation to 100 parts by weight of the acrylic polymer component enables the cohesive force and the durability of the thermally-conductive adhesive agent layer to be more certainly improved; and the use of the cross-linking agent(s) in an amount of 5 parts by weight or less enables the excessive cross-linkage formation of the acrylic polymer component to be suppressed and the adhesiveness of the thermally-conductive adhesive agent layer to be made more excellent.

Usable examples of the isocyanate-based cross-linking agents include: aromatic isocyanates such as tolylene diisocyanate and xylylene diisocyanate; alicyclic isocyanates such as isophorone diisocyanate; and aliphatic isocyanates such as hexamethylene diisocyanate.
Specific usable examples of the isocyanate-based cross-linking agents include: lower aliphatic polyisocyanates such as butylene diisocyanate and hexamethylene diisocyanate; alicyclic isocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, xylylene diisocyanate and polymethylene polyphenyl jiisocyanate; isocyanate adducts such as trimethylolpropane/tolylene diisocyanate trimer adduct (trade name: "Coronate L," manufactured by Nippon Polyurethane Industry Co., Ltd.), trimethylolpropane/hexamethylene diisocyanate trimer adduct (trade name: "Coronate HL," manufactured by Nippon Polyurethane Industry Co., Ltd.) and isocyanurate-modified hexamethylene diisocyanate (trade name: "Coronate HX," manufactured by Nippon Polyurethane Industry Co., Ltd.); polyether polyisocyanate and polyester polyisocyanate, and adducts of these with various polyols; and multifunctionalized polyisocyanates such as polyisocyanates multifunctionalized with isocyanurate bonds, buret bonds, allophanate bonds and the like.

In the composition preparation step, the amount of the cross-linking agent(s) is regulated in such a way that the gel fraction of the cross-linked thermally-conductive adhesive agent layer is preferably 40 to 90% by weight, more preferably 50 to 85% by weight and furthermore preferably 55 to 80% by weight. The gel fraction set to be 40% by weight or more offers an advantage such that the cohesive force is made more sufficient and the durability of the thermally-conductive adhesive agent layer can be made more excellent, and the gel fraction set to be 90% by weight or less offers an advantage such that the adhesiveness of the thermally-conductive adhesive agent layer can be made more excellent.

The gel fraction (% by weight) of the thermally-conductive adhesive agent layer is a value obtained as follows: a sample of a dry weight W1 (g) is sampled from the thermally-conductive adhesive agent layer, and immersed in ethyl acetate; then the insoluble matter of the sample is taken out from the ethyl acetate; then after drying, the weight W2 (g) of the insoluble matter is measured, and the gel fraction is derived from the formula (W2/W1) x 100.

In the composition preparation step, the silane coupling agent can be included in the thermally-conductive adhesive agent composition, for the purpose of making more excellent the adhesive force and the durability of the thermally-conductive adhesive agent layer and more improving the affinity between the thermally-conductive particle and the acrylic polymer component.

As the silane coupling agent, heretofore known silane coupling agents can be appropriately used. Specifically, usable examples of the silane coupling agents include: epoxy group-containing silane coupling agents such as 3-glycidoxypropyltrimethoxysilane, 3-glycidoxypropyltriethoxysilane, 3-glycidoxypropylmethyldiethoxysilane and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane and 3-triethoxysilyl-N-(1,3-dimethylbutylidene)propylamine; (meth)acryl group-containing silane coupling agents such as 3-acryloxypropyltrimethoxysilane and 3-methacryloxypropyltriethoxysilane; and isocyanate group-containing silane coupling agents such as 3-isocyanate propyltriethoxysilane.

The silane coupling agents may be used each alone or as mixtures of two or more thereof. The silane coupling agent(s) is used in an amount of preferably 0.01 to 10 parts by weight, more preferably 0.02 to 5 parts by weight and furthermore preferably 0.05 to 2 parts by weight in relation to 100 parts by weight of the acrylic polymer component.
The use of the silane coupling agent(s) in an amount of 0.01 parts by weight or more in relation to 100 parts by weight of the acrylic polymer component offers an advantage such that the surface of the thermally-conductive particle is more certainly coated with the silane coupling agent(s) and the affinity between the thermally-conductive particle and the acrylic polymer component can be more increased. The use of the silane coupling agent(s) in an amount of 10 parts by weight or less in relation to 100 parts by weight of the acrylic polymer component allows the thermal conductivity of the thermally-conductive adhesive agent layer to be more increased.

In the composition preparation step, for the purpose of improving the adhesive force and the durability of the thermally- conductive adhesive agent layer, a tackifier can be included in the thermally-conductive adhesive agent composition.

As the tackifier, heretofore known tackifiers can be appropriately used. Specific usable examples of the tackifier include rosin-based resins, terpene-based resins, aliphatic petroleum resins, aromatic petroleum resins, copolymer petroleum resins, alicyclic petroleum resins, xylene resins and elastomers.

The tackifier is included in the thermally-conductive adhesive agent composition in an amount of preferably 10 to 100 parts by weight, more preferably 20 to 80 parts by weight and furthermore preferably 30 to 50 parts by weight in relation to 100 parts by weight of the acrylic polymer component.

As the method for mixing the individual components included in the thermally-conductive adhesive agent composition, it is possible to adopt a heretofore known method in which the individual components are uniformly mixed with a mixer or the like.

Next, the adhesive agent layer formation step is described in detail.

In the adhesive agent layer formation step, for the purpose of producing a thermally-conductive adhesive sheet with a support, for example, the support such as a film is coated with the thermally-conductive adhesive agent composition, and the volatile components contained in the thermally-conductive adhesive agent composition is removed by evaporation; thus a sheet-shaped thermally-conductive adhesive agent layer can be formed on the support.
Examples of the volatile components contained in the thermally-conductive adhesive agent composition include: the aforementioned cyclic organic compound of 8 or less carbon atoms and the aforementioned organic compound of 3 or less carbon atoms having a hydroxy, ketone, aldehyde, carboxyl or nitrile group; and the solvent in the case where the solvent for dissolving the acrylic polymer component is used.

As the support, it is possible to preferably use a support easily releasable from the sheet-shaped thermally-conductive adhesive agent layer; specific usable examples of the support include: porous materials such as paper, cloth and non-woven fabric; plastic film and metal foil.
Examples of the shape of the support include: a sheet-like shape, a net-like shape, a foam-like shape and a shape formed by laminating these shapes. As the support, a sheet-shaped plastic film is preferably used because of being excellent in surface smoothness.

The plastic film used as the support is not particularly limited; examples of the plastic film include polyethylene film, polypropylene film, polybutene film, polybutadiene film, polymethylpentene film, polyvinyl chloride film, vinyl chloride copolymer film, polyethylene terephthalate film, polybutylene terephthalate film, polyurethane film and ethylene-vinyl acetate copolymer film.

The film can be subjected to, if necessary, a release treatment or an antifouling treatment, using a silicone-based release agent, a fluorine-based release agent, a long chain alkyl-based release agent or a fatty acid amide-based release agent, or a silica powder. The film can also be subjected to, if necessary, an antistatic treatment by applying, kneading or vapor depositing a common antistatic agent.

By appropriately subjecting the surface of the film to a treatment such as a silicone-based release agent treatment, a long chain alkyl-based release agent treatment or a fluorine-based release agent treatment, it is possible to more enhance the release property such that the film is made easily releasable from the thermally-conductive adhesive agent layer.
The thickness of the film is usually 5 to 200 µm and preferably 5 to 100 µm.

As the method for coating the support with the thermally-conductive adhesive agent composition, common heretofore known methods can be adopted. The support can be coated with a paste-like or liquid thermally-conductive adhesive agent composition, for example, by roll coating, kiss-roll coating, gravure coating, reverse coating, roll brush coating, spray coating, dip roll coating, bar coating, knife coating, air-knife coating, curtain coating, lip coating or extrusion coating using a die coater or the like.

The thickness of the formed thermally-conductive adhesive agent layer is preferably 20 µm to 5 mm, more preferably 50 µm to 2 mm and 100 µm to 1 mm.

In the method for producing a thermally-conductive adhesive sheet, it is preferable to form the thermally-conductive adhesive agent layer so as to have a thermal conductivity of 0.5 W/m·K or more. The formation of the thermally-conductive adhesive agent layer so as to have a thermal conductivity of 0.5 W/m.K or more enables the thermally-conductive adhesive agent layer to exhibit a sufficient thermal conduction performance even when the thermally-conductive adhesive agent layer is made to adhere, for example, to the heat sink of a semiconductor module.
The formation of the thermally-conductive adhesive agent layer so as to have a thermal conductivity of 0.5 W/m.K or more can be performed, for example, by varying the ratio between the amount of the acrylic polymer component and the amount of the thermally-conductive particle. Specifically, the thermal conductivity of the thermally-conductive adhesive agent layer can be increased, for example, by increasing the weight ratio of the thermally-conductive particle to the acrylic polymer component.

In the method for producing a thermally-conductive adhesive sheet, the formation of the thermally-conductive adhesive agent layer with the thermally-conductive adhesive agent composition including the cyclic organic compound of 8 or less carbon atoms or the organic compound of 3 or less carbon atoms having a hydroxy, ketone, aldehyde, carboxyl or nitrile group preferably allows the modulus of elasticity of the thermally-conductive adhesive agent layer to be 90% or less in relation to the modulus of elasticity of the thermally-conductive adhesive agent layer formed with a thermally-conductive adhesive agent composition including no aforementioned organic compound. In other words, the use of the thermally-conductive adhesive agent composition including the aforementioned organic compound preferably allows the thermally-conductive adhesive agent layer to be formed in such a way that the modulus of elasticity of the thermally-conductive adhesive agent layer is 90% or less in relation to the modulus of elasticity of the thermally-conductive adhesive agent layer formed with the thermally-conductive adhesive agent composition including no aforementioned organic compound.
The decrease of the modulus of elasticity of the thermally-conductive adhesive agent layer can be performed, for example, by increasing the amount of the cyclic organic compound of 8 or less carbon atoms or the amount of the organic compound of 3 or less carbon atoms having a hydroxy, ketone, aldehyde, carboxyl or nitrile group, included in the thermally-conductive adhesive agent composition.
The phrase "the modulus of elasticity of the thermally-conductive agent layer is made to be 90% or less" means that the modulus of elasticity of the thermally-conductive agent layer is made to be 90% or less in relation to the modulus of elasticity of the thermally-conductive adhesive agent layer prepared in the same manner as for the thermally-conductive adhesive agent layer prepared by involving the cyclic organic compound of 8 or less carbon atoms or the organic compound of 3 or less carbon atoms having a hydroxy, ketone, aldehyde, carboxyl or nitrile group, except that neither of these organic compounds is used.

In the method for producing a thermally-conductive adhesive sheet, it is possible to perform, if necessary, a finishing step of completing the thermally-conductive adhesive sheet after performing the adhesive agent layer formation step, by further bonding a support such as a film to the surface of the thermally-conductive adhesive agent layer.
The thermally-conductive adhesive sheet produced by performing the finishing step includes a support such as a film disposed on each of both sides of the sheet-shaped thermally-conductive adhesive agent layer. Thus, such a thermally-conductive adhesive sheet can be used, for example, under the conditions that the two supports are released from the thermally-conductive adhesive agent layer and the thermally-conductive adhesive agent layer is made to adhere to the heat sink or the like of a semiconductor module.

In the present invention, within a range not remarkably impairing the advantageous effect of the invention, heretofore known technical matters can be appropriately adopted.

For example, in the foregoing embodiment, description is made on the method for producing the thermally-conductive adhesive sheet in which a support is disposed on one side or on each of the both sides of the sheet-shaped thermally-conductive adhesive agent layer; however, the present invention is not limited to such an embodiment, and, for example, the production method may be a method for producing a thermally-conductive adhesive sheet including only a sheet-shaped thermally-conductive adhesive layed.

### EXAMPLES

Next, the present invention is described in more detail with reference to Examples without intention to limit the present invention to these Examples.

### Example 1

### <Synthesis of Acrylic Polymer>

In a reaction vessel equipped with a condenser tube, a nitrogen introduction tube, a thermometer and a stirrer, the following starting materials were placed; then the air in the reaction system was sufficiently replaced with nitrogen gas. Then, the resulting mixture was heated at 80°C for 3 hours to yield an acrylic polymer solution. From the acrylic polymer solution, the polymerization solvent was distilled off to yield an acrylic polymer:
butyl acrylate ((eth)acrylic monomer): 70 parts by weight
2-ethylhexyl acrylate ((meth)acrylic monomer): 30 parts by weight
acrylic acid (carboxyl group-containing monomer): 3 parts by weight
4-hydroxybutyl acrylate (hydroxy group-containing monomer): 0.05 part by weight
2,2'-azobisisobutyronitrile (polymerization initiator): 0.1 part by weight toluene (polymerization solvent): 155 parts by weight

### <Composition Preparation Step>

### •Starting Materials

above-described acrylic polymer: 100 parts by weight
ethyl acetate (solvent for dissolving acrylic polymer component): 55 parts by weight
methanol: 30 parts by weight
boron nitride particle (trade name: "HP-40," manufactured by Mizushima Ferroalloy Co., Ltd.): 100 parts by weight
isocyanate-based cross-linking agent (trade name: "Coronate L," manufactured by Nippon Polyurethane Industry Co., Ltd.): 1 part by weight

In the reaction vessel, 100 parts by weight of the synthesized acrylic polymer was dispersed in 55 parts by weight of ethyl acetate. Then, to the obtained dispersion liquid, 30 parts by weight of methanol was added and mixed, then 100 parts by weight of the boron nitride particle as a thermally-conductive particle was added, an 1 part by weight of the cross-linking agent way further added.

The mixed dispersion liquid as kneaded by stirring at 800 rpm for 3 minutes, an then defoamed by stirring at 120 rpm for 3 minutes. The composition preparation step was performed as described above to prepare a liquid thermally-conductive adhesive agent composition.

### <Adhesive Agent Layer Formation Steep>

Next, the prepared thermally- conductive adhesive agent composition was applied with a roll coater onto the release-treated surface of a 38-µm thick polyester film (support) (silicone release-treated product, trade name: "Lumilar S-10 #38, " manufactured by Toray Industries, Inc.) with one release-treated side in such a way that the thickness of the adhesive agent layer after curing was 120 µm. Then, the coated film was allowed to stand still in a horizontal manner at room temperature for 5 minutes, and subsequently subjected to hot air drying for 10 minutes in a drying oven (manufactured by Espec Corp.) set at 130°C. In this way, the adhesive agent layer formation step was performed to form a sheet-shaped thermally-conductive adhesive agent layer.

### <Finishing Step>

The thermally-conductive adhesive agent layer cured by drying and a 38-µm thick polyester film (aforementioned polyester film) with one release-treated side were bonded to each other in such a way that the thermally-conductive adhesive agent layer and the release-treated surface of the polyester film were brought into contact with each other, and thus the finishing step was performed to produce a thermally-conductive adhesive sheet.

### Example 2

A thermally-conductive adhesive sheet was produced in the same manner as in Example 1 except that toluene used in place of methanol.

### Example 3

A thermally-conductive adhesive sheet was produced in the same manner as in Example 1 except that ethanol was used in place of methanol.

### Example 4

A thermally-conductive adhesive sheet was produced in the same manner as in Example 1 except that hexane was used in place of methanol.

### Comparative Example 1

A thermally-conductive adhesive sheet was produced in the same manner as in Example 1 except that nothing was used (nothing was added) instead of the use of methanol.

### Comparative Example 2

A thermally-conductive adhesive sheet was produced in the same manner as in Example 1 except that water was used in place of methanol.

### (Measurement of Tensile Modulus of Elasticity)

From the thermally-conductive adhesive agent layer of the thermally-conductive adhesive sheet of each of Examples and Comparative Examples, a measurement sample was sampled so as to have an initial length of 10 mm and an initial cross-sectional area of 0.1 to 0.5 mm². The resulting measurement sample was subjected to a tensile test at a measurement temperature of 23°C, with a distance between chucks of 50 mm and at a tensile rate of 50 mm/min to the elongation variation magnitude (mm) of the sample. A tangent was drawn to the initial rise portion of the obtained stress-strain curve (S-S curve); the tensile strength corresponding to 100% elongation on the tangent was divided by the cross-sectional area to derive the tensile modulus of elasticity

### (Measurement of Thermal Conductivity)

For the measurement of the thermal conductivity, the polyester film in the thermally-conductive adhesive sheet of each of Examples an Comparative Examples was released, the thermally-conductive adhesive agent layer was bonded to a 2-µm thick PET film with a hand roller, and then a PET film was bonded to the other adhesive side of the thermally-conductive adhesive agent layer in the same manner to yield a measurement sample, The measurement of the thermal conductivity was performed with a thermal diffusivity measurement apparatus (ai-phase, manufactured by ai-Phase Co., Ltd.); the thermal conductivity was derived by multiplying the thermal diffusivity by the specific heat and density As the values of the specific heat and density, 1.54 J/gK and 1.61 g/cm³ were used, respectively.

The tensile modulus of elasticity and the thermal conductivity in each of Examples and Comparative Examples are respectively shown in Table 1. Table 1 shows the proportion of the tensile modulus of elasticity and the proportion of the thermal conductivity of each of Examples and Comparative Examples relative to the tensile modulus of elasticity and the thermal conductivity of Comparative Example 1 respectively assumed to be 100. Table 1 also shows the solubility parameters of the compounds (methanol, toluene, ethanol, hexane and water) added to the thermally-conductive adhesive agent composition in each of Examples and Comparative Examples. FIG. 1 shows the plot of the proportion of the tensile modulus of elasticity and the proportion of the thermal conductivity of each of Examples and Comparative Examples.

**[Table 1]**

| | Example 1 | Example 2 | Example 3 | Example 4 | Comparative Example 1 | Comparative Example 2 |
|---|---|---|---|---|---|---|
| Mixed compound | Methanol | Toluene | Ethanol | Hexane | Water | - |
| Proportion of tensile modulus of elasticity | 70.2 | 71.0 | 82.7 | 85.3 | 91.1 | 100.0 |
| Proportion of thermal conductivity | 118.0 | 118.8 | 105.1 | 111.0 | 96.2 | 100.0 |
| Tensile modulus of elasticity [MPa] | 6.9 | 6.9 | 8.1 | 8.3 | 8.9 | 9.8 |
| Thermal conductivity [W/mK] | 3.8 | 3.8 | 3.4 | 3.6 | 3.1 | 3.2 |
| Solubility parameter | 14.5 | 8.9 | 12.7 | 7.8 | 23.4 | - |

From the results of Examples and Comparative Examples, it has been verified that the thermal conductivity of the thermally-conductive adhesive agent layer can be improved by adding a specific organic compound (such as methanol) to the thermally- conductive adhesive agent composition so as to allow the tensile modulus of elasticity of the thermally-conductive adhesive agent layer to be 90% or less in relation to the tensile modulus of elasticity of the thermally-conductive adhesive agent layer using no such an organic compound. On the other hand, in Comparative Example 2, in which water was added to the thermally-conductive adhesive agent composition, the decrease of the tensile modulus of elasticity of the thermally-conductive adhesive agent layer was not sufficient (the relative value of the modulus of elasticity was 90% or more), and the thermal conductivity of the thermally-conductive adhesive agent layer was not able to be improved.

## Claims

1. A method for producing a thermally-conductive adhesive sheet including a thermally-conductive adhesive agent layer by performing: a composition preparation step of preparing a thermally-conductive adhesive pomposition including a thermally-conductive particle and an acrylic polymer component; and an adhesive agent layer formation step of forming a sheet-shaped thermally-conductive adhesive agent layer with the thermally-conductive adhesive agent composition,
wherein in the composition preparation step, a cyclic organic compound of 8 or less carbon atoms, or an organic compound of 3 or less carbon atoms having a hydroxy, ketone, aldehyde, carboxyl or nitrile group is mixed as a constitutional component of the thermally-conductive adhesive agent composition.

2. The method for producing a thermally-conductive adhesive sheet according to claim 1, wherein in the composition preparation step, 10 to 40 parts by weight of the cyclic organic compound of 8 or less carbon atoms, or 10 to 40 parts by weight of the organic compound of 3 or less carbon atoms having a hydroxy ketone, aldehyde, carboxyl or nitrile group is used in relation to 100 parts by weight of the thermally-conductive particle.

3. The method for producing a thermally-conductive adhesive sheet according to claim 1 or 2, wherein in the composition preparation step, 10 to 1000 parts by weight of the thermally-conductive particle is used in relation to 100 parts by weight of the acrylic polymer component.

4. The method for producing a thermally- conductive adhesive sheet according to any one of claims 1 to 3, wherein by forming the thermally-conductive adhesive agent layer with the thermally-conductive adhesive agent composition including the cyclic organic compound of 8 or less carbon atoms, or the organic compound of 3 or less carbon atoms having a hydroxy, ketone, aldehyde, carboxyl or nitrile group, the modulus of elasticity of the thermally-conductive adhesive agent layer is made to be 90% or less in relation to the modulus of elasticity of a thermally-conductive adhesive agent layer formed of a thermally-conductive adhesive agent composition not including the organic compound.

5. The method for producing a thermally-conductive adhesive sheet according to any one of claims 1 to 4, wherein in the composition preparation step, at least one selected from the group consisting of toluene and hexane as the cyclic organic compound of 8 or less carbon atoms and methanol and ethanol as the organic compound of 3 or less carbon atoms having a hydroxy group is mixed as a constitutional component of the thermally-conductive adhesive agent composition.

6. The method for producing a thermally-conductive adhesive sheet according to any one of claims 1 to 5, wherein in the composition preparation step, ethyl acetate or butyl acetate is further mixed as a constitutional component of the thermally-conductive adhesive agent composition.

7. The method for producing a thermally-conductive adhesive sheet according to any one of claims 1 to 6, wherein in the composition preparation step, at least a boron nitride particle is used as the thermally-conductive particle.

8. The method for producing a thermally-conductive adhesive sheet according to any one of claims 1 to 7, wherein the thermally-conductive adhesive agent layer is formed to have a thermal conductivity of 0.5 W/m.K or more.
